# EUROPEAN PATENT SPECIFICATION

(11) **EP 1 454 518 B1**
(45) Date of publication and mention of the grant of the patent: **24.04.2013**
(21) Application number: 04100852.5
(22) Date of filing: 03.03.2004
(51) Int. Cl.: A01B 73/04

(54) **A device at an agricultural implement**
Vorrichtung für landwirtschaftlche Maschine
Dispositif pour machine agricole

(30) Priority: 05.03.2003 SE 3005931
(43) Date of publication of application: 08.09.2004
(73) Proprietor: Väderstad-Verken AB, 590 21 Väderstad (SE)
(72) Inventor: KARLSSON, Per, 595 53, MJÖLBY (SE)
(74) Representative: Stein, Jan

(56) References cited:
- US-A- 2 605 686
- US-A- 2 768 567
- US-A- 2 952 472
- US-A- 3 195 652
- US-A- 3 422 908
- US-A- 3 627 059

## Description

The invention relates to an agricultural implement according to the preamble of Claim 1 see US 3627059 eg.

### BACKGROUND OF THE INVENTION

There are on the market a plurality of different types or agricultural implements or machines that can be drawn by a tractor, for example seed drills. It is not uncommon for these implements to have a working width of 8-10 metres. These implements must sometimes be transported between different fields or to machine halls, sometimes on public roads. To enable such transport to be made, the implement often consists of a central frame section with hinged outer frame sections, which thereby reduces the width of the implement.

In particular, seed drills designed in this way often have a carrying wheel entity arranged behind each frame section. The carrying wheels are moveable in relation to the frame sections with the aim of achieving the desired working depth for the seed drilling implement. The movement is usually achieved by a hydraulic cylinder entity mounted between the frame section and a carrying wheel entity journalled in bearings rotatable thereat.

When such an implement is to be transported the outer frame sections are folded up accordingly. The transport width of the implement is thus generally the distance between the carrying wheels on the left and right outer frame sections. To reduce this distance it is therefore desirable to be able to fold in the carrying wheels further towards the centre of the implement (in the folded position).

The simplest way to solve this at first glance is to permit the hydraulic cylinder entity used for adjustment of the carrying wheels to draw the carrying wheels in further. However, in most cases this solution proves not to be the best. On most types of implement, this cylinder entity is namely only one of several cylinder entities coupled together in a so-called 'master and slave' system. This system is designed to maintain optimal function in ordinary work with few operator movements.

To be able to use the hydraulic cylinder entity for carrying wheel adjustment requires accordingly that this cylinder be independent of others, which leads to a more complicated operation of the implement in ordinary work.

One way to solve this that exists on the market today is to provide the hydraulic system with a number of manual valves that can be repositioned so that the cylinders can be uncoupled from each other. However, farmers are often of the opinion that such solutions are complicated and difficult to use.

### OBJECT OF THE INVENTION

The object of the invention is to provide a solution that minimizes transport width for agricultural implements, particularly seed drills, with folding outer frame sections. A further object is to achieve a solution whereby the width reduction takes place through moving in the carrying wheel entities that is reliable, cost effective and easy to use for the farmer where the above-mentioned problems are minimized.

### SUMMARY OF THE INVENTION

The object has been achieved by a device according to the characterizing part of Claim 1. By the fastening of the hydraulic cylinder entity at either the outer frame section or the carrying wheel entity being moveable between two positions, this permits relative movement between the outer frame section and the carrying wheel entity without hydraulic fluid flow in the hydraulic cylinder entity. The carrying wheel entity can thereby be turned in towards the centre of the implement without the hydraulic system needing to be affected.

The devices according to Claims 2, 3, show different advantageous design embodiments in which a spring is used to achieve displacement of the hydraulic cylinder entity between the two positions in at least one direction and how this should be solved practically for best effect.

Claim 4 describes a preferred embodiment where the spring is so designed and fastened that in transport mode it influences the fastening of the hydraulic cylinder from a first position towards a second position, while in working mode it is overcome by the dead weight of the carrying wheel entity so that the fastening of the hydraulic cylinder entity remains in the first position.

Furthermore Claim 5 describes a solution where the moveable fastening of the hydraulic cylinder entity is arranged in a spatially efficient way.

Claim 6 describes an embodiment where the moveable fastening of the hydraulic cylinder entity can be locked in at least one position. It can be advantageous to be able to lock the cylinder entity, at least when the implement is in its working position. Since the greatest part of the inplement's dead weight, which is several times greater than that of the carrying wheel entity, then rests on the carrying wheels, the dead weight of the implement strives to displace the fastening towards the second position.

Finally, Claim 7 describes an embodiment where the device according to the invention is applied on a seed drill with an outer folding frame section on each side of the central frame section.

### DRAWING SUMMARY

The invention is described below more closely with the help of an example embodiment according to the attached drawings. For reasons of clarity, in some cases only one of a plurality of similar details has been numbered in the figures.

Figure 1 shows a view of a known seed drill.
Figure 2 shows a detailed view of a seed drill of the same type as in Figure 1 but provided with a device according to the invention in a working position.
Figure 3 shows a detailed view of a fastening device according to the invention as shown in Figure 2 in a working position.
Figure 4 shows a detailed view according to Figure 2 in a transport position.
Figure 5 shows a detailed view according to Figure 3 in a transport position.

### DETAILED DESCRIPTION

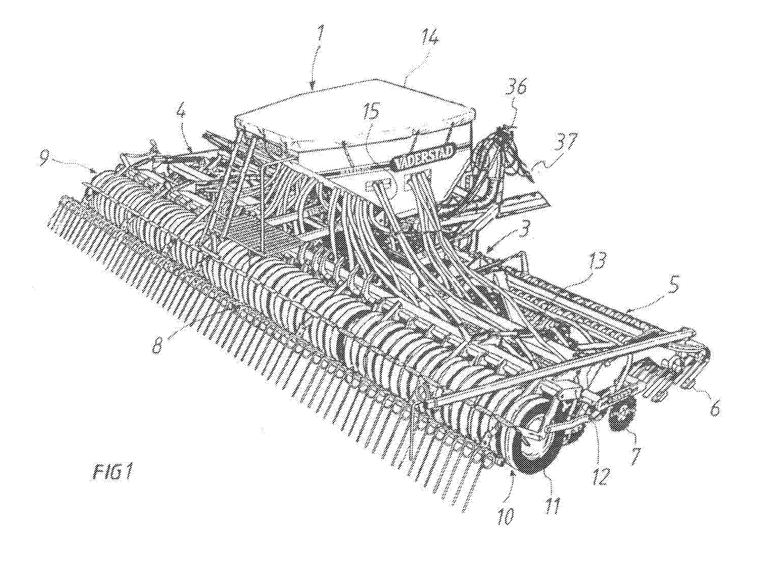

Figure 1 shows a known type of agricultural machine in the form of a seed drill at which the invention can advantageously be applied. The seed drill 1 comprises a central frame section 3 at which are two turnable outer frame sections 4, 5 journalled in bearings. The seed drill 1 is intended to be coupled to a tractor (not shown) with the help of a towing device. Each frame section 3, 4, 5 is provided with tools in the form of a number of soil tilling tools 6 and sowing tools 7 in the form of discs and coulters. At the central frame section 3 is arranged a seed hopper 14 from which seed is distributed to the sowing tools 7 via tubes 15.

Behind each frame section 3, 4, 5 is arranged a respective carrying wheel entity 8, 9, 10. In Figure 1 the right carrying wheel entity 10 is seen most clearly. There it can be seen that the carrying wheel entity 10 comprises a number of carrying wheels 11 that are journalled in bearings at a cross beam 12. The right carrying wheel entity 10 is turnably journalled in bearings at the right outer frame section 5. Movement between the frame section 5 and the carrying wheel entity 10 is achieved with the help of a hydraulic cylinder entity 13 fastened between them. This relative movement is desirable in order to be able to adjust the height of the carrying wheels relative to the tools 6, 7 for optimal work results depending on external conditions such as the relevant crop and prevailing soil conditions.

The functions of the seed drill 1 are controlled from the tractor via electrical signal cables 36 and hydraulic hoses 37 connected to the hydraulic system of the tractor.

The seed drill shown in Figure 1 has a working width of approx. 8 metres. To achieve a considerable smaller width in transport the outer frame sections 4, 5 are turnably journalled in bearings at the central frame section 3 and in transport can therefore be turned upwards and inwards towards the seed hopper 14. The transport width is then equal to the distance between the carrying wheels 11 of the right and left carrying wheel entities 9, 10.

The turning movement is achieved by a hydraulic cylinder not shown in the figure which also has the task of permitting a certain relative movement between the sections in ordinary work.

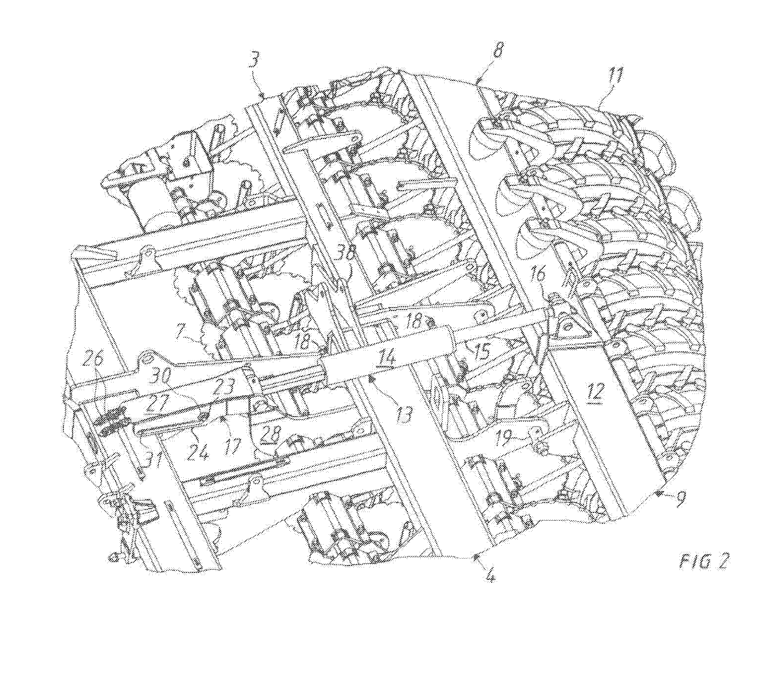

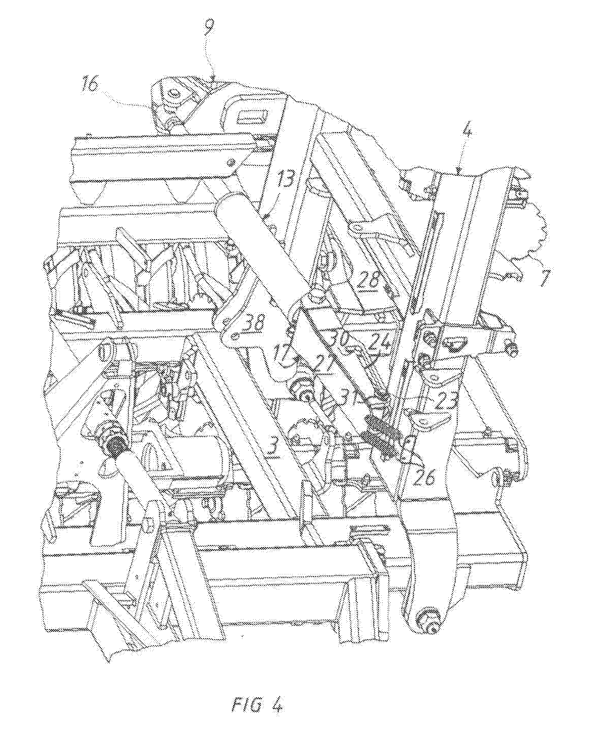

The invention shown in the following figures 2-5 can to advantage be applied on the same seed drill according to Figure 1. For reasons of clarity certain details that are not relevant to the invention have been omitted from these figures. Accordingly, certain components are omitted such as soil tillage tools, distribution tubes, hydraulic hoses, certain fastening elements and in Figure 4 even the seed hopper.

Figure 2 shows a detailed view of the central frame section 3 and the left outer frame section 4. It also shows that the left carrying wheel entity 9 is turnably journalled in bearings at the left outer frame section 4 via a shown journal point 19.

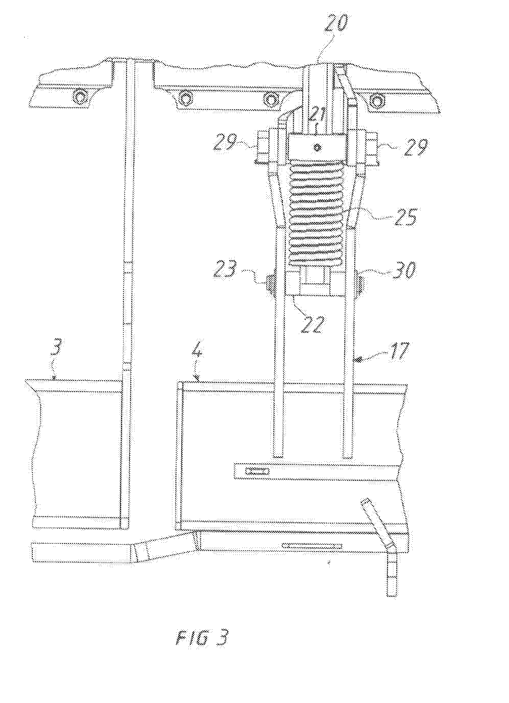

A hydraulic cylinder entity 13 according to the invention is fastened between a journal point 16 on the cross beam 12 of the left carrying wheel entity 9 and a journal device 17 at the frame section 4. The hydraulic cylinder entity 13 comprises a cylinder 14 with connections 18 to which hydraulic hoses not shown here are connected and a piston 15 connected to the journal point 16. The hydraulic cylinder entity 13 further comprises a bar element 20 journalled in bearings at the journal device 17 as shown in detail in Figure 3.

In Figure 3 the steel casing 27 and the acting springs 26 fastened thereto and to the frame section shown in Figure 2 have been omitted for reasons of clarity.

Figures 2 and 3 show that the journal device 17 is journalled in bearings at a carrying arm 28 by two shaft journals 29 rigidly fastened to the frame section 4. Between the shaft journals is arranged a guide sleeve 21 through which runs the bar element 20.
The bar element 20 is fastened at the journal device via a bearings sleeve 22 through which runs a guide journal 23. The guide journal 23 is in turn moveably fastened in an L-shaped groove 24 in the journal device.

A spring 25 in the form of a compression spring is pre-loaded between the bearings sleeve 22 and the guide sleeve 21 and the encompassing bar element 20. A pair of tension springs 26 fastened to the frame section 4 are arranged to displace the steel casing 27 of the journal device 17 towards the frame section 4 with the aim of preventing the guide journal 23 leaving its end position 30.

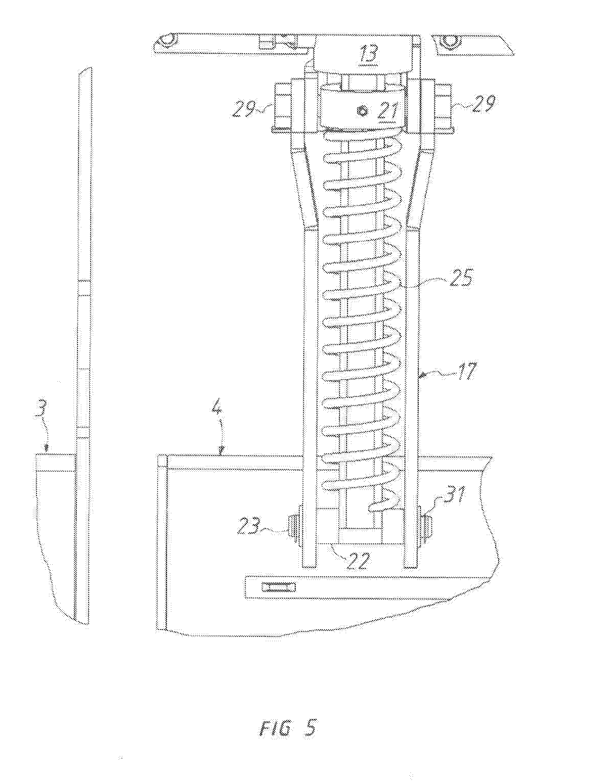

Figures 4 and 5 show the same details as in Figures 2 and 3 but in a transport position. In Figure 4 it can accordingly be seen that the left outer frame section 4 has been folded up to a transport position. This folding up is achieved by a cylinder not shown fastened in the fastening lugs 38.

It can further be seen that the guide journal 23 has been displaced from a first position 30 or an end position as shown in Figures 2 and 3 to a second position 31 or end position shown in Figures 4 and 5. This has been achieved by the operator after having folded up the frame section 4 with the help of a lever or similar stretched the journal device 17 against the action of the tension springs 26. The guide journal 23 has thereby been freed from its first end position 30 and the compression spring 25 has drawn it to its second end position 31.

Since no flow has occurred in the hydraulic system and the position of the piston 15 relative to the cylinder 14 is unchanged, it follows that the journal point 16 is also displaced in essentially the same direction and distance as the guide journal 23. Hereby the carrying wheel entity 10 has also been rotated further in towards the centre of the implement whereby the transport width is reduced without use of the hydraulic system.

The compression spring 25 is suitably so dimensioned that it acts to move the fastening 23 of the hydraulic cylinder entity 13 from its first end position 30 towards the second end position 31 when the frame section 4 is disposed in its transport position (Fig. 4, 5) while when the frame section 4 is disposed in its working position (Fig. 2, 3) the force of the compression spring 25 is overcome by the dead weight of the carrying wheel entity 10 so that the fastening 23 of the hydraulic cylinder entity 13 remains in the first end position 30.

When the frame section 4 is to be lowered from the folded transport position to the lowered working position the fastening in the form of the guide journal 23 is accordingly disposed in its second end position 31. While lowering is underway an increasing proportion of the dead weight of the carrying wheel entity 10 comes to act on the hydraulic cylinder entity 13 via the journal point 16 with a force opposing the spring 25. Shortly before the frame section 4 is completely lowered the dead weight of the carrying wheel entity 10 overcomes the force of the spring and the guide journal 23 is moved to its first end position 30 where it is locked with the help of the tension springs 26 acting together with the L-shaped groove 24.

When the carrying wheel entity 10 then reaches the ground almost all the dead weight of the seed drill 1 comes to rest on the carrying wheels 11 and through the geometric relationships again acts on the hydraulic cylinder entity 13 with a force directed towards the second end position 31. However the movement is prevented by the locking 24, 26.

Conversely when the frame section 4 is to be lifted from working position to transport position there is no movement in the guide journal 23 which remains locked in its first end position 30. When the transport position has been adopted the operator as mentioned above can with the help of a lever or similar release the guide journal 23 from the first end position 30 whereafter the compression spring 25 acts to draw it to the second end position 31.

In the example above only one half of the machine has been dealt with. Of course the solution looks essentially similar on the other half.

The invention can be varied in a plurality of different ways within the framework of the patent claims, even if the embodiment described above is the preferred form. For example the spring can be omitted or replaced by some other type of acting member.

Furthermore the spring does not necessarily need to be placed around the bar element of a cylinder but can be placed somewhere else between the frame section and the carrying wheel entity. A further alternative is to reverse the arrangement so that the cylinder fastening to the carrying wheel entity is instead the moveable one. Yet another alternative is that the mounting of the hydraulic cylinder entity is movably arranged at the outer frame section as well as at the carrying wheel entity. However the embodiment described is preferable for reasons such as space.

Here the solution described is with one carrying wheel entity per frame section. It is also conceivable to use several separate carrying wheel entities for each frame section. However that would involve a more complicated solution with the need for several hydraulic cylinders.

Finally it can be mentioned that the invention can also be applied on agricultural implements other than seed drills, such as soil tillage machines, even if the transport problematics are most apparent with seed drills. It can also be conceivable to have an asymmetrical arrangement with different tools on the outer frame sections and where perhaps only one half is provided with the device according to the invention.

## Claims

1. An agricultural implement (1) comprising a central frame section (3) and at least one outer frame section (4, 5), said frame sections (4, 5) being provided with work tools (6, 7), and at least one carrying wheel entity (8, 9, 10) moveable relative to the respective frame section (3, 4, 5), where a hydraulic cylinder entity (13) is fastened between the frame section (3, 4, 5) and the carrying wheel entity (8, 9, 10) to achieve relative mouvement between these, and which outer frame sections (4, 5) are moveable between a flowered working position and a raised transport position, **characterised in that** the hydraulic cylinder entity (13) at the outer frame section (4, 5) and/or at the carrying wheel entity (9, 10) is mounted in a journal device (17) moveable between two positions (30, 31) in said journal device (17), wherein a spring (25) is directly or indirectly pre- loaded between the frame section (4, 5) and the carrying wheel entity (9, 10) for displacing the hydraulic cylinder entity (13) between the two positions (30, 31) in at least one direction so that relative movement between the outer frame section (4, 5) and the carrying wheel entity (9, 10) is permitted without hydraulic fluid flow in the hydraulic cylinder entity (13).

2. An implement according to Claim 1, wherein the spring (25) is pre-loaded between the hydraulic cylinder entity (13) and that of the frame section (4, 5) or the carrying wheel entity (9, 10) at which the hydraulic cylinder entity (13) is moveably fastened.

3. An implement according to Claim 2, wherein the spring (25) is pre-loaded between the hydraulic cylinder entity (13) and the moveable fastening (23).

4. An implement according to any one of Claims 1-3, wherein the spring (25) is so dimensioned and fastened that it acts to move the fastening (23) of the hydraulic cylinder entity (13) from a first position (30) to a second position (31) when the outer frame section (4, 5) is disposed in its transport position, while the force of the spring (25) is overcome by the dead weight of the carrying wheel entity (9, 10) when the outer frame section (4, 5) is disposed in its working position so that the fastening (23) of the hydraulic cylinder entity (13) remains in its first position (30).

5. An implement according to any one of the preceding Claims, wherein the fastening (23) of the hydraulic cylinder entity (13) at the outer frame section (4, 5) is moveable.

6. An implement according to any one of the preceding Claims, wherein the moveable fastening (23) of the hydraulic cylinder entity (13) can be locked in at least one position (30) with a locking member (24, 26).

7. An implement according to any one of the preceding Claims, wherein the agricultural implement (1) is comprised of a seed drill with a central frame section (3), an outer frame section (4, 5) on each side of the central frame section (3), a respective carrying wheel entity (8, 9 10) moveably journalled in bearings at each frame section (4, 5) and a respective hydraulic cylinder entity (13) fastened between both outer frame sections (4, 5) and the carrying wheel entity (9, 10) journalled in bearings thereat.

## Patentansprüche

1. Landwirtschaftliche Maschine (1), umfassend einen zentralen Rahmenabschnitt (3) und mindestens einen äußeren Rahmenabschnitt (4, 5), welche Rahmenabschnitte (4, 5) mit Arbeitswerkzeugen (6, 7) und mindestens einer zum jeweiligen Rahmenabschnitt (3, 4, 5) bewegbaren Stützrad-Einheit (8, 9, 10) versehen sind, wobei eine hydraulische Zylindereinheit (13) zwischen dem Rahmenabschnitt (3, 4, 5) und der Stützrad-Einheit (8, 9, 10) befestigt ist, um relative Bewegung dazwischen zu erreichen, und welche äußeren Rahmenabschnitte (4, 5) zwischen einer abgesenkten Arbeitsposition und einer gehobenen Transportposition bewegbar sind, **dadurch gekennzeichnet, dass** die hydraulische Zylindereinheit (13) am äußeren Rahmenabschnitt (4, 5) und/oder an der Stützrad-Einheit (9, 10) in einer Lagerzapfeneinrichtung (17) montiert und zwischen zwei Positionen (30, 31) in der Lagerzapfeneinrichtung (17) bewegbar ist, wobei eine Feder (25) zwischen dem Rahmenabschnitt (4, 5) und der Stützrad-Einheit (9, 10) zum Verlagern der hydraulischen Zylindereinheit (13) zwischen den zwei Positionen (30, 31) in mindestens einer Richtung direkt oder indirekt vorgespannt ist, so dass relative Bewegung zwischen dem äußeren Rahmenabschnitt (4, 5) und der Stützrad-Einheit (9, 10) ohne Strömung hydraulischer Flüssigkeit in der hydraulischen Zylindereinheit (13) möglich ist.

2. Maschine nach Anspruch 1, wobei die Feder (25) zwischen der hydraulischen Zylindereinheit (13) und der des Rahmenabschnitts (4, 5) oder der Stützrad-Einheit (9, 10), woran die hydraulische Zylindereinheit (13) beweglich befestigt ist, vorgespannt ist.

3. Maschine nach Anspruch 2, wobei die Feder (25) zwischen der hydraulischen Zylindereinheit (13) und der beweglichen Befestigung (23) vorgespannt ist.

4. Maschine nach irgendeinem der Ansprüche 1-3, wobei die Feder (25) so ausgelegt und befestigt ist, dass sie arbeitet, um die Befestigung (23) der hydraulischen Zylindereinheit (13) von einer ersten Position (30) in eine zweite Position (31) zu bewegen, wenn der äußere Rahmenabschnitt (4, 5) in seiner Transportposition angebracht ist, während die Kraft der Feder (25) durch das Eigengewicht der Stützrad-Einheit (9, 10) überwunden wird, wenn der äußere Rahmenabschnitt (4, 5) in seiner Arbeitsposition angebracht ist, so dass die Befestigung (23) der hydraulischen Zylindereinheit (13) in seiner ersten Position (30) verbleibt.

5. Maschine nach irgendeinem der vorhergehenden Ansprüche, wobei die Befestigung (23) der hydraulischen Zylindereinheit (13) am äußeren Rahmenabschnitt (4, 5) beweglich ist.

6. Maschine nach irgendeinem der vorhergehenden Ansprüche, wobei die bewegliche Befestigung (23) der hydraulischen Zylindereinheit (13) in mindestens einer Position (30) mit einem Verriegelungselement (24, 26) gesichert werden kann.

7. Maschine nach irgendeinem der vorhergehenden Ansprüche, wobei die landwirtschaftliche Maschine (1) aus einer Sämaschine mit einem zentralen Rahmenabschnitt (3), einem äußeren Rahmenabschnitt (4, 5) auf jeder Seite des zentralen Rahmenabschnitts (3), einer jeweiligen Stützrad-Einheit (8, 9 10), die in Lagern an jedem Rahmenabschnitt (4, 5) beweglich gelagert ist, und einer jeweiligen hydraulischen Zylindereinheit (13), die zwischen beiden äußeren Rahmenabschnitten (4, 5) und der in Lagern daran gelagerten Stützrad-Einheit (9, 10) befestigt ist, besteht.

## Revendications

1. Outil agricole (1) comprenant une section centrale de cadre (3) et au moins une section de cadre extérieure (4, 5), lesdites sections de cadre (4, 5) étant pourvues d'outils de travail (6, 7), et au moins une unité porteuse de roues (8, 9, 10) qui peut se déplacer par rapport à la section de cadre respective (3, 4, 5), une unité de cylindre hydraulique (13) étant fixée entre la section de cadre (3, 4, 5) et l'unité porteuse de roues (8, 9, 10) pour obtenir mouvement relatif entre celles-ci, et lesdites sections de cadre extérieures (4, 5) pouvant se déplacer entre une position de travail abaissée et une position de transport relevée, **caractérisé en ce que** l'unité de cylindre hydraulique (13) à la section de cadre extérieure (4, 5) et/ou à l'unité porteuse de roues (9, 10) est monté dans un dispositif de palier (17) de manière à pouvoir se déplacer entre deux positions (30, 31) dans ledit dispositif de palier (17), un ressort (25) étant directement ou indirectement prétensionné entre la section de cadre (4, 5) et l'unité porteuse de roues (9, 10) pour déplacer l'unité de cylindre hydraulique (13) entre les deux positions (30, 31) dans au moins une direction, si bien que mouvement relatif entre la section de cadre extérieure (4, 5) et l'unité porteuse de roues (9, 10) est permis sans écoulement de fluide hydraulique dans l'unité de cylindre hydraulique (13).

2. Outil selon la revendication 1, dans lequel le ressort (25) est prétensionné entre l'unité de cylindre hydraulique (13) et la section de cadre (4, 5) ou l'unité porteuse de roues (9, 10) à laquelle l'unité de cylindre hydraulique (13) est fixée de manière mobile.

3. Outil selon la revendication 2, dans lequel le ressort (25) est prétensionné entre l'unité de cylindre hydraulique (13) et le dispositif de fixation mobile (23).

4. Outil selon l'une quelconque des revendications 1 à 3, dans lequel le ressort (25) est dimensionné et fixé si bien qu'il fait déplacer le dispositif de fixation (23) de l'unité de cylindre hydraulique (13) à partir d'une première position (30) à une deuxième position (31) lorsque la section de cadre extérieure (4, 5) est disposée dans sa position de transport, pendant que la force du ressort (25) est surmontée par le poids mort de l'unité porteuse de roues (9, 10) lorsque la section de cadre extérieure (4, 5) est disposée dans sa position de travail si bien que le dispositif de fixation (23) de l'unité de cylindre hydraulique (13) reste in dans sa première position (30).

5. Outil selon l'une quelconque des revendications précédentes, dans lequel le dispositif de fixation (23) de l'unité de cylindre hydraulique (13) à la section de cadre extérieure (4, 5) peut se déplacer.

6. Outil selon l'une quelconque des revendications précédentes, dans lequel le dispositif de fixation (23) de l'unité de cylindre hydraulique (13) peut être verrouillé dans au moins une position (30) avec un élément de verrouillage (24, 26)

7. Outil selon l'une quelconque des revendications précédentes, dans lequel l'outil agricole (1) est compris par un semoir avec une section centrale de cadre (3), une section de cadre extérieure (4, 5) sur chaque côté de la section de cadre centrale (3), une unité supporteuse de roues respective (8, 9, 10) logée de manière mobile dans des paliers à chaque section de cadre (4, 5) et une unité de cylindre hydraulique respective (13) fixée entre les deux sections de cadre extérieures (4, 5) et l'unité supporteuse de roues (9, 10) y logée dans les paliers.
